# EUROPEAN PATENT APPLICATION

(11) **EP 2 160 004 A1**
(43) Date of publication of application: **03.03.2010**
(21) Application number: 09768718.0
(22) Date of filing: 08.01.2009
(51) Int. Cl.: H04M 3/51

(54) **METHOD, SYSTEM AND SERVER FOR PROVIDING CALL SERVICE THROUGH CALL CENTER**

(30) Priority: 26.06.2008 CN 200810068044
(71) Applicant: Huawei Technologies Co., Ltd., Shenzhen, Guangdong 518129 (CN)
(72) Inventor: SHEN, Lei, Shenzhen Guangdong 518129 (CN)
(74) Representative: Thun, Clemens
(86) International application number: PCT/CN2009/070082
(87) International publication number: WO 2009/155793

(57) **Abstract**

A method for providing call services by a call center, a call service system, and a server thereof are provided. The method includes: receiving user calls from users; determining a corresponding service sequence of each of the users in a call service queue according to a time sequence of the users calls from the users; collecting information of the users when the users are waiting for call services in the call service queue; and providing, according to the corresponding service sequence of the user in the call service queue, the call service to the user if it is the user's turn to accept the call service. Thus, the waiting time of the users is shortened, and the satisfaction degree is enhanced.

## Description

This application claims priority to Chinese Patent Application No. 200810068044.2, filed on June 26, 2008 and entitled "METHOD FOR PROVIDING CALL SERVICES BY CALL CENTER, CALL SERVICE SYSTEM AND SERVER THEREOF", which is incorporated herein by reference in its entirety.

### FIELD OF THE THCHNOLOGY

The present invention relates to a field of communication technology, and particularly to a method for providing call services by a call center, a call service system, and a server thereof.

### BACKGROUND

A call center is a system for realizing a centralized user call service based on the modern communication technology. Users dial a number of the call center. Accordingly, a private branch exchange (PBX) transmits call data to a computer system. Then, the computer system distributes the calls to call operators (for example, agent service console, ASC) or an interaction voice response (IVR) flow according to the call data of the users.

The PBX can provide various services such as voice, conference, and fax for the users by making use of the interaction with external resources. If all ASCs are busy, the users will wait in a queue. During the process of waiting in the queue, a queue maker plays some music for the users until a certain ASC becomes available. Then, a call from a user is switched to the ASC.

Taking a bank call center as an example, a technical solution adopted in the conventional art is described as follows.

Once a user dials a number of the call center, he/she first needs to enter information of an account, a password, and so on. After entering a number account, the user waits for the call service, and the waiting period usually lasts for about 1 minute. If all the ASCs are busy at this time, the user enters a call service queue to wait for the call service, which usually takes several minutes. When an ASC becomes available for the user, the call from the user is switched to the ASC.

When realizing the present invention, the inventor(s) at least find out the following disadvantage in the conventional art.

After a user dials a number of the call center, the call from the user is first switched to an IVR for collecting information. Then, the call is switched to the call service queue to wait for the call service in a queue. In other words, the one who first finishes entering the information waits in the queue first, which does not conform to a principle of first come first serve (FCFS). As a result, the user has to wait in an excessive long time, thereby resulting in a low satisfaction degree.

### SUMMARY

To solve the problems in the conventional art that the users wait in an excessive long time and the satisfaction degree is rather low due to the fact that the one who calls first does not actually waits in a queue first, various embodiments of the present invention provide a method for providing call services by a call center.

The method includes: receiving user calls from users; determining a corresponding service sequence of each of the users in a call service queue according to a time sequence of the users calls from the users; collecting information of the users when the users are waiting for call services in the call service queue; and providing, according to the corresponding service sequence of the user in the call service queue. the call service to the user if it is the user's turn to accept the call service.

One embodiment of the present invention further provides a server, applied to a call service system. The server includes a call receiving unit, a call service queue storage unit, a service sequence determining unit, a service queue executing unit, and a user information collecting unit.

The call receiving unit is adapted to receive user calls from an exchange device, in which the user calls are received by the exchange device from users.

The call service queue storage unit is adapted to store a call service queue.

The service sequence determining unit is adapted to determine a service sequence of each of the users in the call service queue according to a time when the exchange device receives the user calls from the users.

The service queue executing unit is adapted to instruct a call service providing unit to provide a call service for a user when it is the user's turn to accept the call service according to the service sequence of the user in the call service queue determined by the service sequence determining unit.

The user information collecting unit is adapted to collect information of the users while the users are waiting for the call services in the call service queue.

One embodiment of the present invention further provides a call service system, which includes a first call receiving unit, a call service queue storage unit, a service sequence determining unit, a service queue executing unit, a call service providing unit, and a user information collecting unit.

The first call receiving unit is adapted to receive user calls from users.

The call service queue storage unit is adapted to store a call service queue.

The service sequence determining unit is adapted to determine a service sequence of each of the users in the call service queue stored in the call service queue storage unit according to a time when the first call receiving unit receives the user calls from the users.

The service queue executing unit is adapted to instruct the call service providing unit to provide a call service for a user when it is the user's turn to accept the call service according to the service sequence of the user in the call service queue determined by the service sequence determining unit.

The call service providing unit is adapted to provide the call service for the user according to an instruction from the service queue executing unit.

The user information collecting unit is adapted to collect information of the users while the users are waiting for the call services in the call service queue.

Compared with the conventional art, at least the following beneficial effects can be produced by the embodiments of the present invention. After users dial a number of the call center, the call center determines a sequence of each of the users in a call service queue according to a time sequence of the users, which means "the one who dials first waits in a queue first", conforming to the principle of first come first serve (FCFS). Information of the users is collected while the users are waiting for the call services. Therefore, the waiting time of the users may be shortened, and the satisfaction degree of the users may be enhanced.

### BRIEF DESCRIPTION OF THE DRAWING(S)

The technical solutions in the conventional art and the embodiments of the present invention will be described in more detail with reference to the drawings. Apparently the drawings given herein below are merely certain of embodiments of the present invention, and those of ordinary skill in the art without creative work can achieve the other drawings.

FIG. 1 is a schematic view of a construction and a work flow of a call center according to an embodiment of the present invention;

FIG. 2 is a flowchart of a method for providing call services by a call center according to another embodiment of the present invention;

FIG. 3 is a flowchart of a method for providing call services by a call center according to yet another embodiment of the present invention;

FIG. 4 is a schematic view of a construction of a call service system according to an embodiment of the present invention;

FIG. 5 is a schematic view of a construction of a call service system according to another embodiment of the present invention;

FIG. 6 is a schematic view of a construction of a call service system according to yet another embodiment of the present invention;

FIG. 7 is a schematic view of a construction of a server according to an embodiment of the present invention;

FIG. 8 is a schematic view of a construction of a server according to another embodiment of the present invention;

FIG. 9 is a schematic view of a construction of a server according to yet another embodiment of the present invention; and

FIG. 10 is a schematic view of a construction of a server according to still another embodiment of the present invention.

### DETAILED DESCRIPTION

To make the objectives, technical solutions, and advantages of embodiments of the present invention more comprehensible, the technical solutions in the embodiments of the present invention are described below clearly and completely with reference to the drawings in the embodiments of the present invention. Apparently, the described embodiments are merely a part of embodiments of the present invention, rather than all the embodiments. All the other embodiments achieved by those of ordinary skill in the art without creative work fall within the protection scope of the present invention based on the embodiments in the present invention.

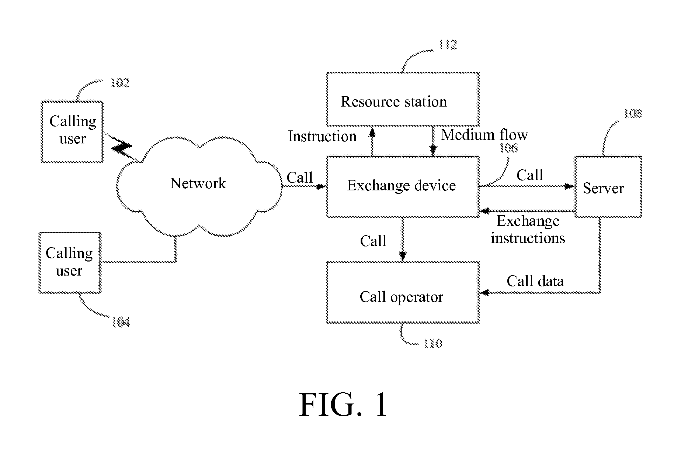

FIG. 1 is a schematic view of a construction and a work flow of a call center according to an embodiment of the present invention. As shown in FIG. 1, a call center is provided in the embodiment of the present invention, which adopts a computer and telephony integrator (CTI) technology. The main construction and the work flow of the call center are shown in FIG. 1. 102 and 104 are respectively call users (for example, 102 is a mobile user, and 104 is a fixed telephone user). Calls made by the call users 102 and 104 are transmitted to the call center over network. The call center includes an exchange device 106, a server 108, a call operator 110, and a resource station 112.

The exchange device 106 may be a PBX or an automatic call distributor (ACD).

The server 108 may be one or more equipments.

The call operator 110 may be an ASC or an intelligent answering device.

The resource station 112 may provide various services such as voice, conference, and fax for users.

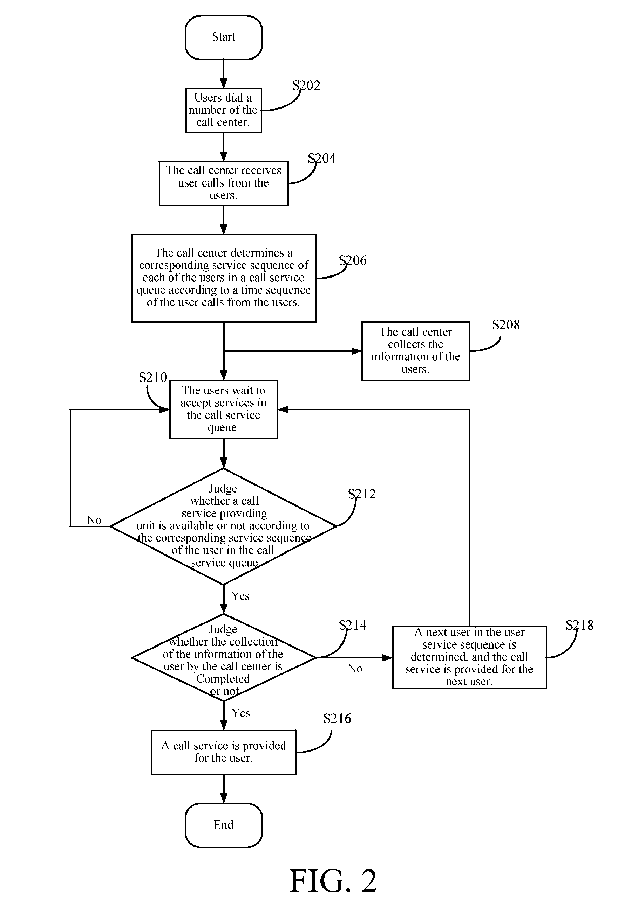

FIG. 2 is a flowchart of a method for providing call services by a call center according to another embodiment of the present invention. As shown in FIG. 2, the method for providing call services for users by the call center in another embodiment of the present invention includes the following steps.

In step S202, users dial a number of the call center.

In step S204, the call center receives user calls from the users.

Multiple users of the step S202 dial the number of the call center. Correspondingly, the call center of the step S204 receives the calls from the multiple users. As the users who dial the number of the call center are subject to a time sequence, and the service resources of the call center are limited, the users need to wait for services in a queue.

In step S206, the call center determines a corresponding service sequence of each of the users in a call service queue according to a time sequence of the user calls received from the users.

In this step, the call service queue may be preset. According to a principle that "the one who calls first enters a queue first", each calling user is labeled in the call service queue, so that the corresponding service sequence thereof in the call service queue may be determined. The call service queue conforms to the rules of first come first serve (FCFS) and first in first out (FIFO).

After the step S206, both step S208 and step S210 are executed at the same time. In other words, while the users are waiting for call services in the call service queue, the call center collects information of the users.

In step S208, the call center collects the information of the users. For example, the information of the user may include a user account, a login password, and the like.

In step S210, the users wait to accept services in the call service queue.

In step S212, according to the corresponding service sequence of the user in the call service queue, it is judged whether a call service providing unit, such as an ASC or an intelligent answering device, is available or not, and the process turns to step S214, if the call service providing unit is available; otherwise, it turns to step S210.

In step S214, it is judged whether the collection of the information of the user by the call center is completed or not, and the process turns to step S216, if the collection is completed; otherwise, it turns to step S218.

In step S216, a call service is provided for the user.

In step S218, a next user in the user service sequence is determined, and the call service is provided for the next user. The user is kept waiting for services in the front of the queue.

In this embodiment, firstly, the call center determines the sequence of users in the call service queue according to a time sequence of each of the users, which means "the one who dials first waits in a queue first", conforming to the principle of FCFS. In addition, information of the users is collected while the users are waiting for services, so that the waiting time of the users is shortened, and the satisfaction degree is enhanced.

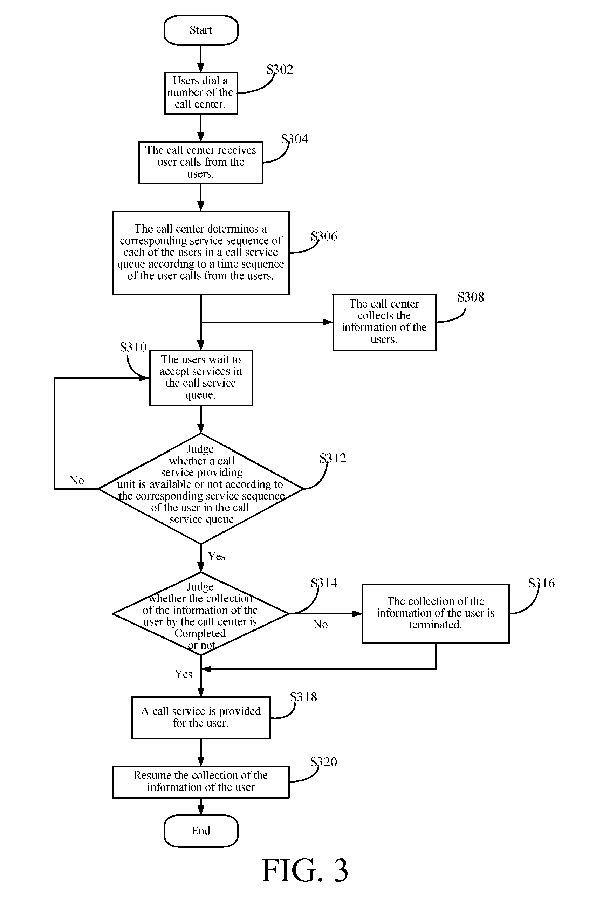

FIG. 3 is a flowchart of a method for providing call services by a call center according to yet another embodiment of the present invention. As shown in FIG. 3, the method for providing call services for users by the call center in yet another embodiment of the present invention include the following steps.

In step S302, users dial a number of the call center.

In step S304, the call center receives user calls from the users.

Multiple users of the step S302 dial the number of the call center. The call center of the step S304 receives the calls from the multiple users. As the users who dial the number of the call center are subject to a time sequence, and the service resources of the call center are limited, for example all the ASCs or the intelligent answering devices are busy, so the users need to wait for services in a queue.

In step S306, the call center determines a corresponding service sequence of each of the users in a call service queue according to a time sequence of the user calls received from the users.

In this step, the call service queue may be preset. According to a principle that "the one who calls first enters a queue first", each calling user is labeled in the call service queue, so that the corresponding service sequence thereof in the call service queue may be determined. The call service queue conforms to the rules of FCFS and FIFO.

After executing the step S306, both step S308 and step S310 are executed at the same time. In other words, while the users are waiting for call services in the call service queue, the call center collects information of the users.

In step S308, the call center collects the information of the users. For example, the information of the user may include a user account, a login password, and the like.

In step S310, the users wait to accept services in the call service queue.

In step S312, according to the corresponding service sequence of the user in the call service queue, it is judged whether a call service providing unit, such as an ASC or an intelligent answering device, is available or not, and the process turns to step S314, if the call service providing unit is available; otherwise, it turns to step S310.

In step S314, it is judged whether the collection of the information of the user by the call center is completed or not, and the process turns to step S318, if the collection is completed; otherwise, it turns to step S316.

In step S316, the collection of the information of the user is terminated, and the process turns to step S318.

In step S318, a call service is provided for the user.

The method in this embodiment of the present invention may further include step S320.

In step S320, the uncompleted collection of the information of the user in the step S316 is resumed.

In this embodiment, firstly, the call center determines the sequence of users in the call service queue according to a time sequence of each of the users, which means "the one who dials first waits in a queue first", conforming to the principle of FCFS. In addition, information of the users is collected while the users are waiting for services, so that the waiting time of the users is shortened, and the satisfaction degree is enhanced.

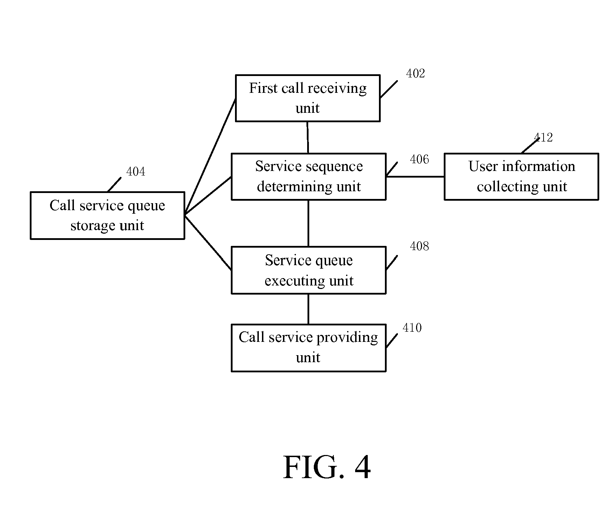

FIG. 4 is a schematic view of a construction of a call service system according to an embodiment of the present invention. As shown in FIG. 4, a call service system is provided in the embodiment of the present invention, which includes: a first call receiving unit 402, a call service queue storage unit 404, a service sequence determining unit 406, a service queue executing unit 408, and a call service providing unit 410.

The first call receiving unit 402 is adapted to receive user calls from users.

The call service queue storage unit 404 is adapted to store a call service queue.

The service sequence determining unit 406 is adapted to determine a corresponding service sequence of each of the users in the call service queue stored in the call service queue storage unit 404 according to a time when the first call receiving unit 402 receives the user calls from the users.

The service queue executing unit 408 is adapted to instruct the call service providing unit 410 to provide a call service for a user when it is the user's turn to accept the call service according to the corresponding service sequence of the user in the call service queue determined by the service sequence determining unit 406.

The call service providing unit 410 is adapted to provide the call service for the user according to an instruction from the service queue executing unit 408. The call service providing unit 410 may be an ASC, an intelligent answering device, and the like.

Furthermore, the call service system may further include a user information collecting unit 412.

The user information collecting unit 412 is adapted to collect information of the users while the users are waiting for call services in the call service queue.

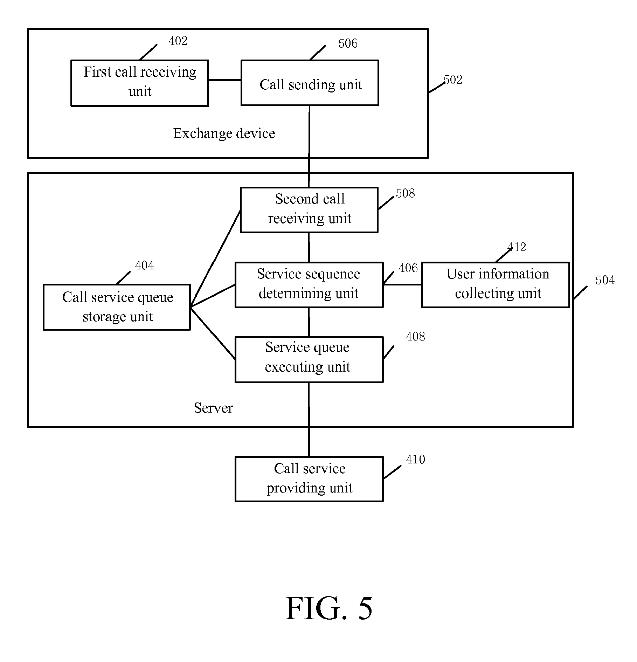

Particularly, FIG. 5 is a schematic view of a construction of a call service system according to another embodiment of the present invention. As shown in FIG. 5, in the call service system in this embodiment, the first call receiving unit 402 may be integrated into an exchange device 502. The exchange device 502 may be a PBX or an ACD. The call service queue storage unit 404, the service sequence determining unit 406, the service queue executing unit 408, and the user information collecting unit 412 may be integrated into a server 504.

The exchange device 502 further includes a call sending unit 506. The call sending unit 506 is adapted to send the user calls received by the first call receiving unit 402 to the server 504.

The server 504 may further include a second call receiving unit 508.

The second call receiving unit 508 is adapted to receive the user calls from the exchange device 502.

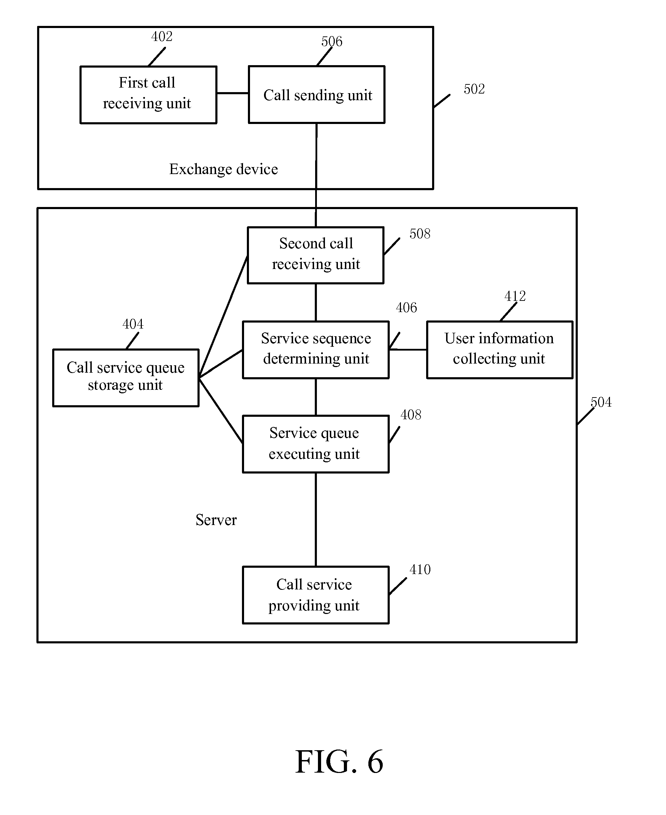

Correspondingly, FIG. 6 is a schematic view of a construction of a call service system according to yet another embodiment of the present invention. As shown in FIG. 6, the call service providing unit 410 may also be integrated into the server 504.

In this embodiment, the call service system first determines the sequence of users in the call service queue according to a time sequence of each of the users, which means "the one who dials first waits in a queue first", conforming to the principle of FCFS. In addition, information of the users is collected while the users are waiting for services, so that the waiting time of the users is shortened, and the satisfaction degree is enhanced.

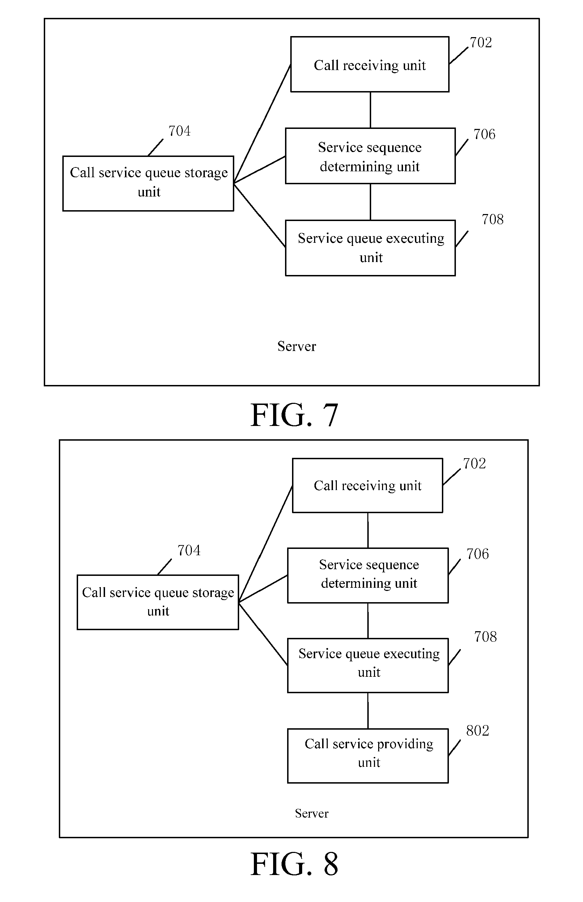

FIG. 7 is a schematic view of a construction of a server according to an embodiment of the present invention. As shown in FIG. 7, a server is provided in this embodiment of the present invention, which is applied to a call service system and includes: a call receiving unit 702, a call service queue storage unit 704, a service sequence determining unit 706, and a service queue executing unit 708.

The call receiving unit 702 is adapted to receive user calls from an exchange device. The user calls may be received by the exchange device from the users, and then transmitted to the server by the exchange device.

The call service queue storage unit 704 is adapted to store a call service queue.

The service sequence determining unit 706 is adapted to determine a corresponding service sequence of each of the users in the call service queue according to a time when the exchange device (or the call receiving unit 702) receives the user calls from the users.

The service queue executing unit 708 is adapted to instruct a call service providing unit to provide a call service for a user when it is the user's turn to accept the call service according to the corresponding service sequence of the user in the call service queue determined by the service sequence determining unit 706. The call service providing unit may be an ASC, an intelligent answering device, and the like.

In this embodiment, the server determines the sequence of users in the call service queue according to a time sequence of each of the users, which means "the one who dials first waits in a queue first", conforming to the principle of FCFS, so that the waiting time of the users is shortened, and the satisfaction degree is enhanced.

FIG. 8 is a schematic view of a construction of a server according to another embodiment of the present invention. As shown in FIG. 8, on the basis of the embodiment shown in FIG. 7, the server in this embodiment of the present invention further includes: a call service providing unit 802.

The call service providing unit 802 is adapted to provide a call service for the user according to an instruction from the service queue executing unit 708. The call service providing unit 802 may be an ASC, an intelligent answering device, and the like.

In this embodiment, the server determines the sequence of users in the call service queue according to a time sequence of each of the users, which means "the one who dials first waits in a queue first", conforming to the principle of FCFS, so that the waiting time of the users is shortened, and the satisfaction degree is enhanced. Furthermore, a whole set of call services can be provided, thereby enhancing an integration level of equipments.

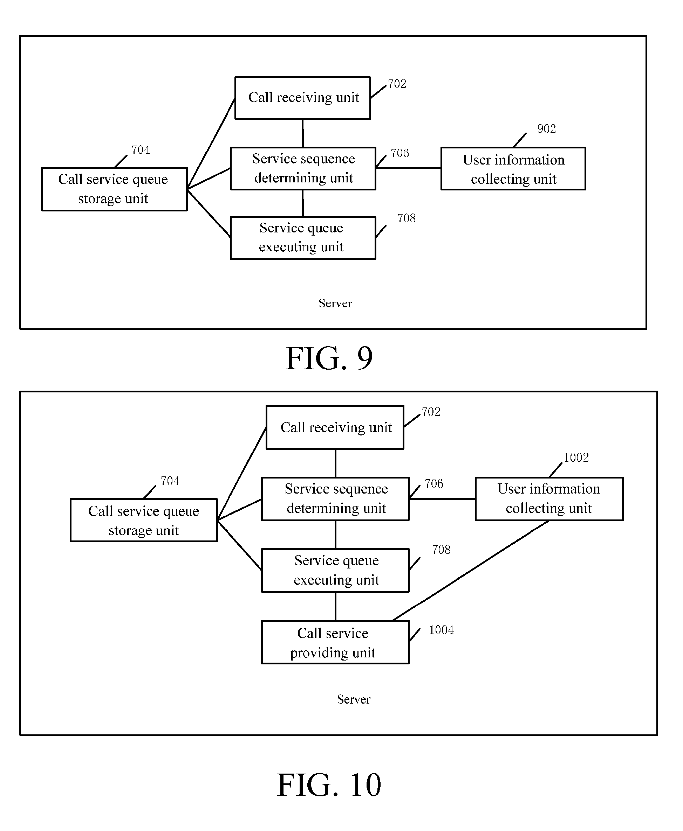

FIG. 9 is a schematic view of a construction of a server according to yet another embodiment of the present invention. As shown in FIG. 9, on the basis of the embodiment shown in FIG. 7, the server in this embodiment of the present invention further includes: a user information collecting unit 902.

The user information collecting unit 902 is adapted to collect information of the users while the users are waiting for call services in the call service queue.

In this embodiment, the server determines the sequence of users in the call service queue according to a time sequence of each of the users, which means "the one who dials first waits in a queue first", conforming to the principle of FCFS. In addition, information of the users is collected while the users are waiting for services, so that the waiting time of the users is shortened, and the satisfaction degree is enhanced.

FIG. 10 is a schematic view of a construction of a server according to still another embodiment of the present invention. As shown in FIG. 10, on the basis of the embodiment shown in FIG. 7, the server in this embodiment of the present invention further includes: a user information collecting unit 1002 and a call service providing unit 1004.

The user information collecting unit 1002 is adapted to collect information of the users while the users are waiting for call services in the call service queue.

The call service providing unit 1004 is adapted to judge whether a collection of the information of the user by the user information collecting unit 1002 is completed or not after receiving an instruction from the service queue executing unit 708. A call service is provided for the user, if the collection is completed, otherwise, a next user in a call service queue is determined, and the call service is provided for the next user.

Alternatively, in the embodiment shown in FIG. 10, the call service providing unit 1004 is adapted to judge whether a collection of the information of the user by the user information collecting unit 1002 is completed or not after receiving an instruction from the service queue executing unit 708. A call service is provided for the user, if the collection is completed; otherwise, the user information collecting unit 1002 is instructed to terminate the collection of the information of the user, and the call service is provided for the user.

In this embodiment, the server determines the sequence of users in the call service queue according to a time sequence of each of the users, which means "the one who dials first waits in a queue first", conforming to the principle of FCFS. In addition, information of the users is collected while the users are waiting for services, so that the waiting time of the users is shortened, and the satisfaction degree is enhanced. Furthermore, a whole set of call services can be provided, thereby enhancing an integration level of equipments.

In conclusion, through the method for providing call services by the call center, the call service system, and the server in the embodiments of the present invention, the call center determines a sequence of the users in a call service queue according to a time sequence of each of the users after the users dial a number of the call center, which means that "the one who dials first waits in a queue first", conforming to the principle of FCFS, so that the waiting time of the users is shortened, and the satisfaction degree is enhanced.

Those of ordinary skill in the art may appreciate that, units and algorithm steps of each example described in the embodiments disclosed herein may be embodied in a form of electronic hardware, computer software, or a combination thereof. In order to clearly illustrate the interchangeability between the hardware and the software, the construction and steps of each example are generally described in terms of the functionality in the above illustrations. Thus, these functionalities are implemented in the form of hardware or software depending on the specific application and design constraints of the technical solution. Professional technicians may adopt different methods to realize the described functions in each specific application, which, however, should be considered as falling within the scope of the present invention.

The methods or algorithm steps described in the embodiments disclosed herein may be implemented in hardware, software modules executed by a processor, or a combination thereof. The software modules may be configured in a random access memory (RAM), a memory, a read-only memory (ROM), an electrically-programmable ROM (EPROM), an electrically-erasable-programmable ROM (EEPROM), a register, a hard disk, a removable disk, a CD-ROM, or a storage medium in any other form.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method for providing call services by a call center, comprising:
receiving user calls from users;
determining a corresponding service sequence of each of the users in a call service queue according to a time sequence of the user calls from the users;
collecting information of the users while the users are waiting for call services in the call service queue; and
providing the call service for the user when it is the user's turn to accept the call service according to the corresponding service sequence of the user in the call service queue.

2. The method for providing call services by a call center according to claim 1, wherein when it is the user's turn to accept the call service according to the corresponding service sequence of the user in the call service queue, and if a collection of the information of the user is not completed yet, a next user in the service sequence is determined and the call service is provided for the next user.

3. The method for providing call services by a call center according to claim 1, wherein when it is the user's turn to accept the call service according to the corresponding service sequence of the user in the call service queue, and if a collection of the information of the user is not completed yet, the collection of the information of the user is terminated and the call service is provided for the user.

4. The method for providing call services by a call center according to claim 3, wherein after providing the call service for the user when it is the user's turn to accept the call service according to the corresponding service sequence of the user in the call service queue, the method further comprises:
resuming the uncompleted collection of the information of the user.

5. A call service system, comprising:
a first call receiving unit, adapted to receive user calls from users;
a call service queue storage unit, adapted to store a call service queue;
a service sequence determining unit, adapted to determine a service sequence of each of the users in the call service queue stored in the call service queue storage unit according to a time when the first call receiving unit receives the user calls from the users;
a service queue executing unit, adapted to instruct the call service providing unit to provide a call service for a user when it is the user's turn to accept the call service according to the service sequence of the user in the call service queue determined by the service sequence determining unit;
a call service providing unit, adapted to provide the call service for the user according to an instruction from the service queue executing unit; and
a user information collecting unit, adapted to collect information of the users while the users are waiting for call services in the call service queue.

6. The call service system according to claim 5, wherein
the first call receiving unit is integrated into an exchange device, and the call service queue storage unit, the service sequence determining unit, the service queue executing unit, and the user information collecting unit are integrated into a server;
the exchange device further comprises a call sending unit adapted to send the user calls received by the first call receiving unit to the server; and
the server further comprises a second call receiving unit adapted to receive the user calls from the exchange device.

7. The call service system according to claim 6, wherein the call service providing unit is integrated into the server.

8. A server, applied to a call service system, comprising:
a call receiving unit, adapted to receive user calls from an exchange device, wherein the user calls are received by the exchange device from users;
a call service queue storage unit, adapted to store a call service queue;
a service sequence determining unit, adapted to determine a service sequence of each of the users in the call service queue according to a time when the exchange device receives the user calls from the users;
a service queue executing unit, adapted to instruct a call service providing unit to provide a call service for a user when it is the user's turn to accept the call service according to the service sequence of the user in the call service queue determined by the service sequence determining unit; and
a user information collecting unit, adapted to collect information of the users while the users are waiting for the call services in the call service queue.

9. The server according to claim 8, wherein the call service providing unit is adapted to provide the call service for the user according to an instruction from the service queue executing unit.

10. The server according to claim 8, wherein the call service providing unit is adapted to judge whether a collection of the information of the user by the user information collecting unit is completed or not after receiving an instruction from the service queue executing unit, providing the call service for the user if the collection is completed, otherwise, determining a next user in the service call queue and providing the call service for the next user.

11. The server according to claim 8, wherein the call service providing unit is adapted to judge whether a collection of the information of the user by the user information collecting unit is completed or not after receiving an instruction from the service queue executing unit, providing the call service for the user if the collection is completed; otherwise, instructing the user information collecting unit to terminate the collection of the information of the user and providing the call service for the user.
